(19) Europäisches Patentamt
European Patent Office
Office européen des brevets

(11) EP 4 220 707 A1

(12) **EUROPEAN PATENT APPLICATION**

(43) Date of publication:
**02.08.2023 Bulletin 2023/31**

(21) Application number: **22157830.5**

(22) Date of filing: **21.02.2022**

(51) International Patent Classification (IPC):
***H01L 23/482*** *(2006.01)* ***C08G 61/00*** *(2006.01)*
***C08G 59/32*** *(2006.01)* ***B33Y 70/00*** *(2020.01)*
***C07B 37/12*** *(2006.01)* ***C09J 163/00*** *(2006.01)*

(52) Cooperative Patent Classification (CPC):
(C-Sets available)
**B29C 73/163; B33Y 70/10; C08G 59/3227; C08K 3/04; C08K 3/346; C09J 163/00** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2022 EP 22154138**

(71) Applicant: **Vrije Universiteit Brussel
1050 Brussel (BE)**

(72) Inventors:
- **SAHRAEEAZARTAMAR, Fatemeh
1160 Auderghem (BE)**
- **BRANCART, Joost
1851 Grimbergen (BE)**
- **ROELS, Ellen
9240 Zele (BE)**
- **VAN ASSCHE, Guy
1560 Hoeilaart (BE)**
- **TERRYN, Seppe
2800 Mechelen (BE)**
- **TABRIZIAN, Seyedreza Kashef
1050 Brussel (BE)**
- **VANDERBORGHT, Bram
1560 Hoeilaart (BE)**

(74) Representative: **Arnold & Siedsma
Bezuidenhoutseweg 57
2594 AC The Hague (NL)**

(54) **CONDUCTIVE SELF-HEALING COMPOSITE MATERIALS**

(57) The present invention relates to conductive self-healing composite materials and uses thereof in various domains, such as additive manufacturing, electronics and robotics. Furthermore, the present invention relates to a method for self-healing said composite materials and structures comprising said composite materials.

EP 4 220 707 A1

(52) Cooperative Patent Classification (CPC): (Cont.)

C-Sets
**C08K 3/04, C08L 65/00;**
**C08K 3/346, C08L 65/00**

**Description**

FIELD OF THE INVENTION

The present invention relates to conductive self-healing composite materials and uses thereof in various domains, such as additive manufacturing, electronics and robotics. Furthermore, the present invention relates to a method for self-healing said composite materials and structures comprising said composite materials.

BACKGROUND TO THE INVENTION

Any material which is applied in any type of application domain is susceptible to a certain degree of degradation over time. This degradation may be caused for instance by environmental conditions, incurred damage during operation or other external factors. Depending on the type of application, different types of materials will be suitable and are generally selected in function of their material-specific properties (e.g. weight, rigidity, flexibility, stability, conductive properties, porosity). When materials are damaged (e.g. material cracks, ruptures, cuts, scratches), an external intervention is often necessary to repair the damage. If the damage is too severe or repairing the damage would be disadvantageous (e.g. due to high costs, prolonged repair times), partial or full replacement of the materials might be necessary. All in all, materials might be damaged, and repair might be necessary over time for the materials and parts made thereof to remain functional. Therefore, materials which could intrinsically correct damage could prevent costs and would be highly beneficial, especially in those areas where parts are frequently damaged or areas where repair or maintenance is difficult or impossible.

Robotics, and more specifically the application of soft grippers, is a prime example of an area susceptible to damage during use. Soft grippers can be deployed in agriculture and food packaging, which is made possible by embodied intelligence, being the role of an agent's body in generating behavior which allows control to be outsourced to a smart design. When used for fruit and vegetable picking, these soft grippers come in close contact with sharp objects (e.g. sharp twigs, thorns, plastic or glass). As a result, macroscopic damage (e.g. perforations, cuts and ruptures) occurs over time and negatively impacts the performance of these grippers. Usually, these soft grippers are produced out of relatively cheap materials, such as elastomers (e.g. silicones, polyurethanes), resulting in replacement rather than repair of damaged grippers. However, this requires time-consuming and costly human intervention as well as a considerable amount of new resources. Moreover, it creates waste material over time, having an important ecologic impact. Because of those downsides, the use of self-healing materials can be seen as promising alternatives to minimize external intervention and allow the damaged materials to be repaired, making material replacement superfluous.

Robots will also be used in remote applications, like search-and-recovery or environmental investigations in (aero)space or marine environments, where it becomes difficult to repair or replace a damaged part. Soft robots can bend, stretch, and twist around obstacles, which gives them the advantage of being safer, but the disadvantage of being harder to control due to their infinite number of degrees of freedom. Knowing the state of a soft system becomes almost impossible without sensors. For soft robots to continue benefitting from the advantages of intrinsic flexibility, the embedded sensors need to be flexible as well. Embedded deformation and force sensors allow for feedback motion control algorithms. The sensors can be either proprioceptive (e.g. perceive whether its fingers are bent) or exteroceptive, sensing the interaction with the environment (e.g. detection of an object in space). Because of these aspects, soft robots are ideal candidates to introduce the self-healing ability by developing structural components and sensors out of self-healing polymers.

Self-healing materials already exist today and have the ability to repair damage without the need to replace these materials. However, a number of drawbacks are known. For extrinsic healing systems, relying on the encapsulation of a healing agent, the healing action may often take place a limited number of times only at the same damage location. Also, the healing mechanism is often unsuitable for healing damages of a considerable size. Furthermore, these healing mechanisms are only available in stiff materials, not offering the flexibility that is highly beneficial, for instance, in soft gripper construction. In many intrinsic healing systems, the material strength often is insufficient for the production of larger 2D or 3D structures having sufficient strength and retention of structural integrity.

A specific type of self-healing materials is the Diels-Alder (DA) polymer network, which provides a solution to most of the aforementioned drawbacks. This network is based on a reversible Diels-Alder reaction between functional diene (e.g. furan) and dienophile (e.g. maleimide) groups, effectuating the self-healing characteristics. The process of crosslinking within these polymers is the most important aspect of the specific self-healing characteristics of the Diels-Alder polymers which is based on strong covalent bonding, allowing the production of 1D, 2D or 3D structures having sufficient mechanical strength even after self-healing. Previous work of the applicant (EP 20192135.0) has led to the development of a novel Diels-Alder polymer network having self-healing capabilities even at room temperature and below, without the need for external intervention.

Incorporation of fillers into polymers is known to change the polymer (processing) properties. Mechanical

properties altered by incorporation of fillers could be for instance tensile strength, tear strength, hardness, and elongation at break. Certain fillers could also lead to properties which the virgin polymer does not possess, for instance electrical conductivity. Examples of (electrical) conductive fillers are metal(s) (particles), such as copper, iron or silver and their oxides, carbon-based fillers, such as carbon black, carbon fibres, graphene or carbon nanotubes, ceramic fillers and even polymeric fillers, such as polyaniline and polypyrrole. Other examples of fillers used in polymers are alumina trihydrate, kaolin clay, nanoclay, calcium carbonate, titanium dioxide, talc, silica, wollastonite, glass, fly ashes, or modified versions thereof (Sanusi et al. Applied Clay Science 2020 185, 105408, Aradhana et al. International Journal of Adhesion and Adhesives 2020 99, 102596). Although fillers are typically incorporated into polymers to have a certain effect, their incorporation can also lead to other (unwanted) effects.

It is therefore an object of the current invention to address the problems residing from incorporation of fillers, by providing novel conductive self-healing composite materials.

## SUMMARY OF THE INVENTION

According to a first aspect, the present invention provides a self-healing, composite material comprising:

- a Diels-Alder polymer comprising the reaction product of a composition comprising a polymaleimide and a monomeric unit according to formula (I);

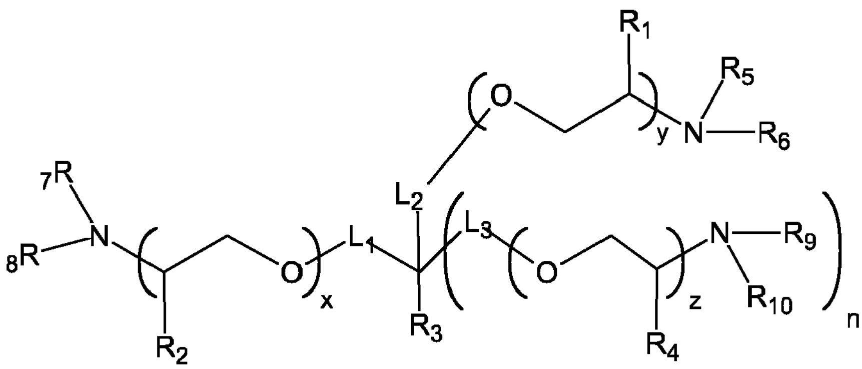

(I)

  wherein, $R_1$ to $R_4$ independently represent H or $C_1$-$C_4$ alkyl, in particular $CH_3$; $R_5$ to $R_{10}$ independently represent H or A; A independently represents a furan-comprising functional group; $L_1$ to $L_3$ independently represent a direct bond or a divalent $C_1$-$C_4$ alkyl, in particular $-CH_2-$; n is 0 or 1; x + y + z is an integer selected from 1 to 75; and characterized in that both said polymaleimide and polyfuran monomeric unit comprise a functionality of at least 2 and in that the sum of the functionalities of both said polymaleimide and polyfuran is at least 4.6, and a maleimide-to-furan stoichiometric ratio between the polymaleimide and the monomeric unit ranges from 0.05 to 0.65;
- a conductive filler; and
- a filler.

According to an embodiment of the invention, said conductive filler may be selected from the list comprising: carbon black, carbon fibres, graphene, carbon nanotubes, metal particles, polyaniline, polypyrrole and the like. Preferably, the conductive filler is carbon black, carbon fibres, graphene or carbon nanotubes.

According to an embodiment of the invention, said conductive filler is present in a range of about 1 to about 30 wt%, preferably about 5 to about 20 wt%, of the total weight of said self-healing composite material.

According to a particular embodiment of the invention, said conductive filler is carbon black, present in a range of about 1 to about 30 wt%, preferably about 5 to about 20 wt%, of the total weight of said self-healing composite material.

According to an embodiment of the invention, said filler may be selected from the list comprising: kaolin clay, nanoclay, calcium carbonate, silica, or modified versions thereof. Preferably, said filler is a nanoclay. More preferably, said filler is a modified nanoclay. Even more preferably, said filler is a modified montmorillonite nanoclay.

According to an embodiment of the invention, said filler is present in a range of about 0.5 to about 5 wt%, preferably about 1 to about 3 wt%, of the total weight of said self-healing composite material.

According to a particular embodiment of the invention, said filler is a modified montmorillonite nanoclay present in a range of about 0.5 to about 5 wt%, preferably about 1 to about 3 wt%, of the total weight of said self-healing composite material.

According to some embodiments of the invention, said self-healing composite material may further comprise

a radical scavenger. Radical scavengers may be added to prevent side reactions such as maleimide homopolymerization. According to particular embodiments of the invention, said radical scavenger may be selected from the list comprising: hydroquinone, butylated hydroxytoluene 4-tert-butylcatechol, methyl-p-benzoquinone and the like.

According to some embodiments of the invention, said self-healing composite material may further comprise additives, said additives adding functionality or characteristics such as color, texture, tactile experience, flexibility, processability, viscosity at higher temperatures and the like to the reaction product.

According to another aspect, the present invention discloses the use of said self-healing composite material, for example in electronics, robotics or biomedicine.

According to some embodiments of the invention, the use in robotics may constitute the subfield of soft robotics. As used herein and unless provided otherwise, the term "soft robotics" should be understood as a subfield of robotics covering the construction of robotic parts and robots from different types of materials approaching the properties of those found in living organisms.

These materials often require a certain amount of flexibility and adaptability depending on their specific purpose.

According to an embodiment of the invention, the use of said self-healing composite material in the manufacturing of 1D, 2D or 3D structures, more particular in the manufacturing of robotic or electronics components is disclosed.

According to an embodiment of the invention, said structures may be manufactured by a method selected from the list comprising: filament extrusion, extrusion-based printing techniques, selective laser sintering, injection molding, compression molding, casting, soft lithography. According to a particular embodiment of the invention, said extrusion-based printing techniques may be selected from the list comprising: fused filament fabrication, direct ink writing and the like.

According to yet another aspect, the present invention discloses a 1D, 2D or 3D structure comprising said self-healing composite material.

According to yet another aspect, the present invention discloses a method of healing a self-healing composite material comprising a Diels-Alder polymer, a conductive filler and a filler, said method comprising: realigning the fractured surfaces of the composite material, when bringing said surfaces into contact with one another; and heating the composite material to mild temperatures.

## BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard, no attempt is made to show structural details of the invention in more detail than is necessary for a fundamental understanding of the invention. The description provided with the drawings makes apparent to those skilled in the art how the several forms of the invention may be embodied in practice.

**Figure 1:** A chemical Diels-Alder reaction scheme between a furan A and maleimide B group resulting in a Diels-Alder reaction product C according to an embodiment of the current invention.

**Figure 2:** Tensile measurements for F5000-DPBM r=0.6 composites: A) Stress-strain curves of a pristine composite material vs. composite material with different loadings of Ensaco 360G; B) Stress-strain curves of a pristine composite material vs. composite material with 7.5 wt% of Ensaco 360G and different loadings of Cloisite 15A; C) Stress-strain curves of a pristine composite material vs. composite material with 10 wt% of Ensaco 360G and different loadings of Cloisite 15A.

**Figure 3:** Electrical conductivity measurements for F5000-DPBM r=0.6 composites: A) Conductivity versus carbon black content for different loadings of Ensaco 260G and different loadings of Cloisite 15A; B) Conductivity versus carbon black content for different loadings of Ensaco 360G and different loadings of Cloisite 15A.

## DETAILED DESCRIPTION OF THE INVENTION

The present invention will now be further described. In the following paragraphs, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

When describing the compounds of the invention, the terms used are to be construed in accordance with the following definitions, unless a context dictates otherwise:

The term "alkyl" by itself or as part of another substituent refers to a fully saturated hydrocarbon of Formula $C_xH_{2x}$ or

$C_xH_{2x+1}$ wherein x is a number greater than or equal to 1. Generally, alkyl groups of this invention comprise from 1 to 20 carbon atoms. Alkyl groups may be linear or branched and may be substituted as indicated herein. When a subscript is used herein following a carbon atom, the subscript refers to the number of carbon atoms that the named group may contain. Thus, for example, $C_{1-4}$ alkyl means an alkyl of one to four carbon atoms. Examples of alkyl groups are methyl, ethyl, n-propyl, i-propyl, butyl, and its isomers (e.g. n-butyl, i-butyl and t-butyl); pentyl and its isomers, hexyl and its isomers, heptyl and its isomers, octyl and its isomers, nonyl and its isomers; decyl and its isomers. $C_1$-$C_6$ alkyl includes all linear, branched, or cyclic alkyl groups with between 1 and 6 carbon atoms, and thus includes methyl, ethyl, n-propyl, i-propyl, butyl and its isomers (e.g. n-butyl, i-butyl and t-butyl); pentyl and its isomers, hexyl and its isomers, cyclopentyl, 2-, 3-, or 4-methylcyclopentyl, cyclopentylmethylene, and cyclohexyl.

Whenever used in the present invention the term "compounds of the invention" or a similar term is meant to include the compounds of general Formula I and any subgroup thereof. This term also refers to their derivatives, such as solvates, hydrates, stereoisomeric forms, racemic mixtures, tautomeric forms, and optical isomers.

As used in the specification and the appended claims, the singular forms "a", "an", and "the" include plural referents unless the context clearly dictates otherwise. By way of example, "a compound" means one compound or more than one compound. The terms described above and others used in the specification are well understood to those in the art. The compounds of the present invention can be prepared according to the reaction scheme provided in the examples hereinafter, but those skilled in the art will appreciate that these are only illustrative for the invention and that the compounds of this invention can be prepared by any of several standard synthetic processes commonly used by those skilled in the art of organic chemistry.

According to a first aspect, the present invention provides a self-healing, composite material comprising:

- a Diels-Alder polymer comprising the reaction product of a composition comprising a polymaleimide and a monomeric unit according to formula (I);

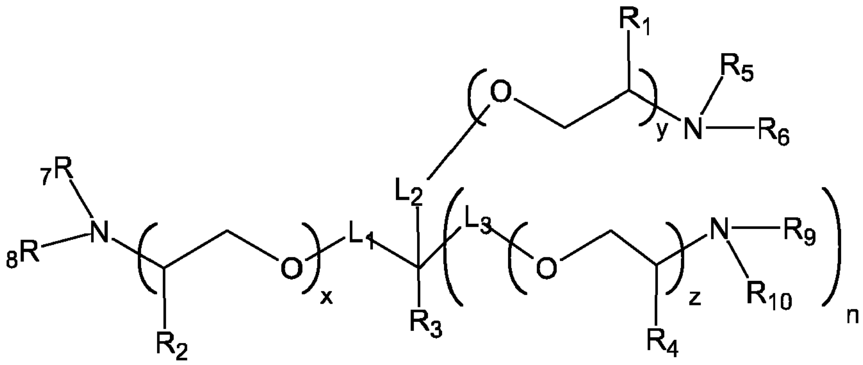

(I)

wherein, $R_1$ to $R_4$ independently represent H or $C_1$-$C_4$ alkyl, in particular $CH_3$; $R_5$ to $R_{10}$ independently represent H or A; A independently represents a furan-comprising functional group; $L_1$ to $L_3$ independently represent a direct bond or a divalent $C_1$-$C_4$ alkyl, in particular $-CH_2-$; n is 0 or 1; x + y + z is an integer selected from 1 to 75; and characterized in that both said polymaleimide and polyfuran monomeric unit comprise a functionality of at least 2 and in that the sum of the functionalities of both said polymaleimide and polyfuran is at least 4.6, and a maleimide-to-furan stoichiometric ratio between the polymaleimide and the monomeric unit ranges from 0.05 to 0.65;
- a conductive filler; and
- a filler.

As mentioned herein and unless provided otherwise, the term "Diel-Alder polymer" should be understood as a polymer network containing reversible covalent crosslinks, formed by a Diels-Alder reaction between a furan and a maleimide, resulting in either isomer of the cycloadduct, referred to as "Diels-Alder bond". The network structure is formed using two monomers, being a furan-functionalized polyether amine according to Formula (I) and a maleimide, in particular a bismaleimide. The furan-functionalized polyether amines could be based on diamines (in case n equals 0) or on triamines (in case n equals 1), in either instance comprising at least one ether or polyether moiety

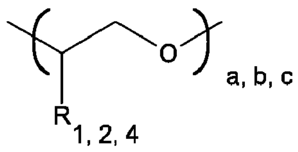

with a, b, c being an integer selected from 1 to 75. Consequently, in the furan-functionalized polyether amines according to Formula (I), each of x, y or z can be 0 with the proviso that at least one of x, y or z is an integer selected from 1 to 75. The Diels-Alder reaction, forming said Diels-Alder bonds, is an equilibrium reaction making the formed crosslink bonds dynamic. Bonds are constantly broken and reformed in said dynamic network over time. However, a crosslink density can be defined for a specific temperature as long as this temperature remains unchanged.

Unless provided otherwise, the maleimide-to-furan stoichiometric ratio (r) should be understood as the molar ratio of maleimide groups to furan groups.

As mentioned herein and unless provided otherwise, the term "conductive filler" should be understood as a filler which, when added to a polymer in a sufficient amount, causes the polymer to become electrically conductive to a certain degree. Electrically conductive fillers known in the art are metal(s) (particles) such as copper, iron or silver and their oxides, carbon-based fillers such as carbon black, carbon fibres, graphene or carbon nanotubes, ceramic fillers or polymeric fillers, such as polyaniline and polypyrrole.

According to an embodiment of the invention, said conductive filler may be selected from the list comprising: carbon black, carbon fibres, graphene, carbon nanotubes, metal particles, polyaniline, polypyrrole and the like. Preferably, the conductive filler is carbon black, carbon fibres, graphene or carbon nanotubes.

According to an embodiment of the invention, said conductive filler is present in a range of about 1 to about 30 wt%, preferably about 5 to about 20 wt%, of the total weight of said self-healing composite material.

According to a particular embodiment of the invention, said conductive filler is carbon black present in a range of about 1 to about 30 wt%, preferably about 5 to about 20 wt%, of the total weight of said self-healing composite material.

As mentioned herein and unless provided otherwise, the term "filler" should be understood as a filler which, when added to a polymer, has an impact on one or more of the properties of the polymer. Polymer fillers known in the art are alumina trihydrate, kaolin clay, nanoclay, titanium dioxide, calcium carbonate, talc, silica, wollastonite, glass, fly ashes, or modified versions thereof.

According to an embodiment of the invention, said filler may be selected from the list comprising: kaolin clay, nanoclay, calcium carbonate, silica, or modified versions thereof. Preferably, said filler is a nanoclay. More preferably, said filler is a modified nanoclay. Even more preferably, said filler is a modified montmorillonite nanoclay.

According to an embodiment of the invention, said filler is present in a range of about 0.5 to about 5 wt%, preferably about 1 to about 3 wt%, of the total weight of said self-healing composite material.

According to a particular embodiment of the invention, said filler is a modified montmorillonite nanoclay present in a range of about 0.5 to about 5 wt%, preferably about 1 to about 3 wt%, of the total weight of said self-healing composite material.

According to another particular embodiment of the invention, said self-healing, composite material comprises: a Diels-Alder polymer comprising the reaction product of a composition comprising a polymaleimide and a monomeric unit according to formula (I);

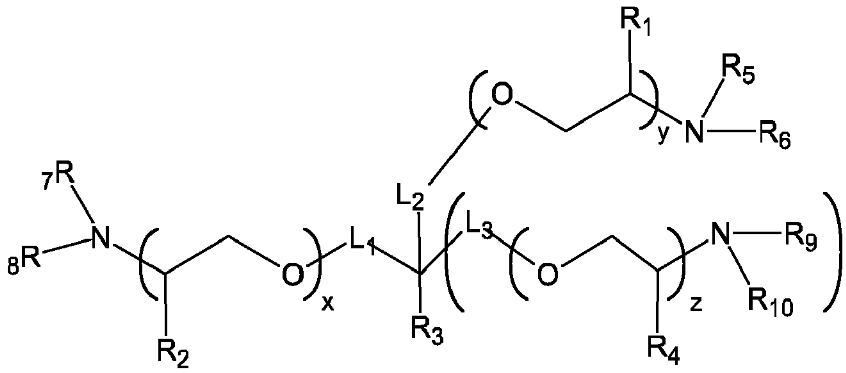

(I)

wherein, $R_1$ to $R_4$ independently represent H or $C_1$-$C_4$ alkyl, in particular $CH_3$; $R_5$ to $R_{10}$ independently represent H or A; A independently represents a furan-comprising functional group; $L_1$ to $L_3$ independently represent a direct bond or a divalent $C_1$-$C_4$ alkyl, in particular $-CH_2-$; n is 0 or 1; x + y + z is an integer selected from 1 to 75; and characterized in

that both said polymaleimide and polyfuran monomeric unit comprise a functionality of at least 2 and in that the sum of the functionalities of both said polymaleimide and polyfuran is at least 4.6, and a maleimide-to-furan stoichiometric ratio between the polymaleimide and the monomeric unit ranges from 0.05 to 0.65; carbon black and a modified montmorillonite nanoclay.

According to some embodiments of the invention, said self-healing composite material may further comprise a radical scavenger. Radical scavengers may be added in order to prevent side reactions such as maleimide homopolymerization. According to particular embodiments of the invention, said radical scavenger may be selected from the list comprising: hydroquinone, butylated hydroxytoluene 4-tert-butylcatechol, methyl-p-benzoquinone and the like.

According to some embodiments of the invention, said self-healing composite material may further comprise additives, said additives adding functionality or characteristics such as color, texture, tactile experience, flexibility, processability, viscosity at higher temperatures and the like to the reaction product.

When Diels-Alder polymers are damaged, Diels-Alder bonds are locally broken in a reversible fashion, resulting in active fracture surfaces. To effectuate healing of this damaged area, a first part of the self-healing process is bringing the fractured surfaces back into contact. Depending on the size of the damage, manual intervention or intervention by the robotic system might be necessary to actively push both fractured surfaces back together, for example when the material is cut all the way through, and two separate pieces are formed. Such full cuts require both fractured pieces to be pushed back together to initiate the healing process. In this case, it is of importance that both pieces are pushed back together as soon as possible after the damage occurred, preferably within 1 to 2 hours. Otherwise, the available reactive groups (maleimide and furan) will start reacting with each other in the separate parts, resulting in a decrease of healing rate and efficiency for a given healing time. Nevertheless, due to its dynamic nature, parts that are separated for longer times, can still be healed with high efficiencies.

After the fractured surfaces are brought back together (autonomously or non-autonomously), the self-healing process can be effectuated by mild heating. At this moment, a risk of microscopic misalignments and small cavities created in between said fractured surfaces exists. This is where the mobility of the Diels-Alder polymer plays an essential role. The specific Diels-Alder polymer properties of the current application allow for a so-called self-sealing zipping effect, wherein the edges of the cavities are pulled together by the exothermal formation of Diels-Alder bonds and cohesive forces. Gradually, the entire cavities and fractured surfaces are being healed as such. Depending on the size of the damage, no manual intervention is necessary for initiating this self-sealing zipping effect.

As used herein and unless provided otherwise, the term "self-healing efficiency" should be understood as the recovery of a material property (e.g. mechanical strength, electrical conductivity) and measured by the ratio of the measured property after healing to the initial material property, being the property before damage. Healing efficiencies are for example based on mechanical moduli, mechanical strength, characterized by fracture stresses and fracture strains. Said efficiency may be expressed in percentages.

A second part in the self-healing process of the current invention is temperature control. The temperature may influence the self-healing efficiency. It is an advantage of the current self-healing composite materials that self-healing can occur with mild heating. As used herein and unless provided otherwise, the term "mild heating" is to be understood as temperatures ranging from about 60 °C to about 100 °C. In order to accomplish healing with mild heating, one of the important aspects to be controlled is the crosslink density. As used herein and unless provided otherwise, the term "crosslinking" of polymers should be understood as the process of forming relatively short sequences of chemical bonds to join two polymer chains together.

Said crosslink density is influenced by the stoichiometric ratio of the initial functional maleimide-to-furan groups of the current invention. A decrease of said stoichiometric ratio creates a maleimide deficit resulting in a decreased crosslink density. As a result, the network mobility is increased. An increased network mobility enhances the ability of the polymer of the current invention to heal macroscopic damages of the material that create large cavities between the fracture surfaces. Also, the excess of furan provides for more reactive furan components at the fracture surface, which enhances the healing rate. Moreover, the excess of furan provides that the concentration of furan remains at more elevated levels as the healing proceeds, which enhances the rate of the Diels-Alder reaction.

It is an advantage of the current invention that the Diels-Alder polymer network comprises both the necessary chain mobility in the network and reactive components of sufficient concentration to heal macroscopic damage with mild heating with high healing efficiency at a considerable rate.

According to a further embodiment of the invention, the maleimide-to-furan stoichiometric ratio between the polymaleimide and the monomeric unit of said Diels-Alder polymer ranges from 0.05 to 0.65, particular from about 0.20 to 0.65, more particular from about 0.40 to 0.65; even more particular the maleimide-to-furan stoichiometric ratio between the polymaleimide and the monomeric unit of said Diels-Alder polymer may be about 0.5.

A third part of the self-healing process concerns the time of self-healing. In some embodiments of the current invention, healing times may range from hours to days, more specifically from about 1, 2, 3, 4, 5, 10, 15, 20, 24 hours to about 1, 2, 3, 4, 5, 6, 7, 8, 9, 10, 15, 20, 30 days. Besides the temperature, also the time of self-healing will influence the healing efficiency. The longer one allows the damaged material to repair itself (i.e. keeping the fracture surfaces in

good contact), the higher the healing efficiency at a given temperature will be. Among other things, aspects such as the maleimide-to-furan ratio, the available reactive groups, flexibility of the monomer units, the crosslink density, the molecular mobility, the healing temperature and the time between the fracture and the contact of the fracture surfaces may influence the healing times which are required to achieve a certain amount of healing efficiency.

According to some embodiments of the invention, healing times may be reduced by elevating healing temperatures.

As evident from the examples hereinafter, a healing efficiency of about 90 to about 100% may be achieved when healing said self-healing composite material within about 1 hour at 90 °C.

According to some embodiments of the invention, the damaged surface of said self-healing composite material may be completely recovered in that the initial strength of said composite material is completely regained. Per reference to the examples hereinafter, such complete recovery wherein the initial strength of said composite material is completely regained, was in particular found to occur in case of realignment of the fractured surfaces when brought in contact with one another.

According to some embodiments of the invention, self-healing may occur at temperatures about and between 60, 70 °C and 90, 100 °C, in particular about and between 65, 70 °C and 90, 95 °C. According to some embodiments of the invention, the increase of temperature may improve the self-healing efficiency.

According to some embodiments of the invention, self-healing efficiencies of about 80, 90, 100%, in particular of about 90, 95, 99%, more particular of about 96, 97, 98% may be achieved.

According to another aspect, the present invention discloses the use of said self-healing composite material, for example in electronics, robotics or biomedicine.

According to some embodiments of the invention, the use in robotics may constitute the subfield of soft robotics. As used herein and unless provided otherwise, the term "soft robotics" should be understood as a subfield of robotics covering the construction of robotic parts and robots from different types of materials approaching the properties of those found in living organisms. These materials often require a certain amount of flexibility and adaptability depending on their specific purpose.

As previously mentioned, an example of robotic systems is the manufacturing of soft robotic system such as soft grippers which can be used in agriculture, e.g. for picking fruit. In these circumstances, the materials of these soft grippers should allow the handling of delicate fruits (e.g. strawberries) without damaging said fruits. In these circumstances, however, it is unavoidable that these soft grippers are damaged, e.g., by sharp twigs and thorns. This is only one example where the specific characteristics of self-healing Diels-Alder polymers offer great advantages when being applied in the field of robotics.

According to some embodiments of the invention, said soft robotic actuators may comprise several bending soft pneumatic actuators (BSPA). Together, these BSPAs may be used more particularly as finger-like structures of said soft robotic systems, such as soft grippers. The bendability thereof allows movement of said finger-like structures mimicking human-like hand gestures.

According to an embodiment of the invention, the use of said self-healing composite material in the manufacturing of 1D, 2D or 3D structures, more particular in the manufacturing of robotic or electronics components, is disclosed.

According to an embodiment of the invention, said structures may be manufactured by a method selected from the list comprising: filament extrusion, extrusion-based printing techniques, selective laser sintering, injection molding, compression molding, casting, soft lithography. According to a particular embodiment of the invention, said extrusion-based printing techniques may be selected from the list comprising: fused filament fabrication, direct ink writing and the like.

According to yet another aspect, the present invention discloses a 1D, 2D or 3D structure comprising said self-healing composite material.

According to yet another aspect, the present invention discloses a method of healing a self-healing composite material comprising a Diels-Alder polymer, a conductive filler and a filler, said method comprising: realigning the fractured surfaces of the composite material, when bringing said surfaces into contact with one another; and heating the composite material to mild temperatures.

According to some embodiments of the invention, the method of self-healing may occur at temperatures about and between 60, 70 °C and 90, 100 °C, in particular about and between 65, 70 °C and 90, 95 °C. According to some embodiments of the invention, the increase of temperature may improve the self-healing efficiency.

The compounds of the present invention can be prepared according to the method(s) provided in the examples hereinafter, but those skilled in the art will appreciate that these are only illustrative for the invention and that the compounds of this invention can be prepared by any of several standard synthetic processes commonly used by those skilled in the art of organic chemistry.

EXAMPLES

As described herein before, the self-healing characteristics of the Diels-Alder-polymers are based on the reversible crosslinking reaction between the furan functionalized polyether amines according to formula (I) with a polymaleimide. Figure 1 shows the reversible Diels-Alder reaction scheme between a furan A and maleimide B group resulting in a Diels-Alder reaction product C. The reversible Diels-Alder polymer network is based on a reversible Diels-Alder reaction between the functional furan A and maleimide group B, resulting in a strong covalent bond that can be thermally or mechanically broken and reformed in a reversible fashion, effectuating the self-healing characteristics.

*Synthesis*

In this example, the synthesis of Diels-Alder-based polymers as the reaction product of a composition comprising a polymaleimide and a monomeric unit according to formula (I) is disclosed. The synthesis is based on a two-step reaction resulting in the reaction product.

In the first step, polyether amines are functionalized with furan functional groups via an Irreversible epoxy-amlne reaction with furfuryl glycidyl ether (FGE), resulting In a furan-functionalized polyether amine. For this, the compounds are mechanically mixed in a stoichiometric ratio (molarity of amino groups on the polyether amine relative to the molarity of furfuryl glycidyl ether) and left to react at 60 °C for 5 days and at 90 °C for 2 days, upon continuous mixing. A list of suitable polyether amines can be found in Table 1.

***Table 1. List of suitable polyether amines used for furan functionalization with FGE.***

| Polyether amines | Structure | Molar mass g $mol^{-1}$ | NH Functionality | Functional weight g $mol^{-1}eq^{-1}$ |
|---|---|---|---|---|
| T403 | — 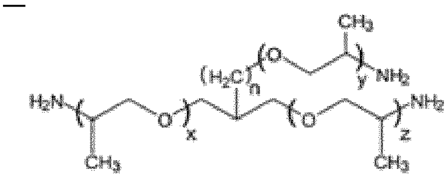 | 463 | 5.4 | 86 |
| T3000 | | 2916 | 6 | 486n.d. |
| T5000 | | 6104 | 5.9 | 1040 |
| D230 | 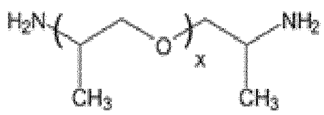 | 63 | 4 | 217 |
| D400 | | 432 | 4 | 108 |
| D2000 | | 1986 | 4 | 497 |
| D4000 | | 4546 | 4 | 1137 |

In the second step, the resulting furan-functionalized polyether amines are reversibly crosslinked by reaction with a maleimide-containing monomer. A list of suitable maleimide-containing monomers can be found in Table 2.

*Table 2. List of suitable maleimide-containing monomers.*

| Maleimide | Chemical structure | Molar mass (g $mol^{-1}$) | Maleimide Functionality |
|---|---|---|---|
| 1,1'-(methylenedi-4,1-phenylene) bismaleimide (DPBM) | 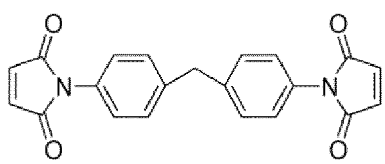 | 358.36 | 2 |
| N,N'-(1,3-phenylene) dimaleimide | 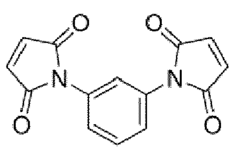 | 265.22 | 2 |

(continued)

| Maleimide | Chemical structure | Molar mass (g $mol^{-1}$) | Maleimide Functionality |
|---|---|---|---|
| N,N'-(1,4-phenylene) dimaleimide | 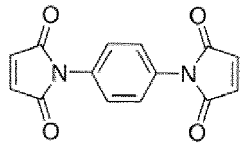 | 265.22 | 2 |
| Homide 122G (HOS Technik) | 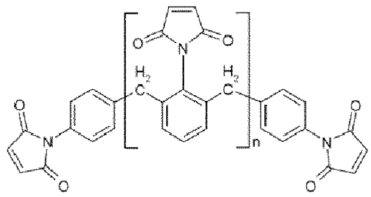 | 508.16 | 2.8 |
| Homide 116 (HOS Technik) | 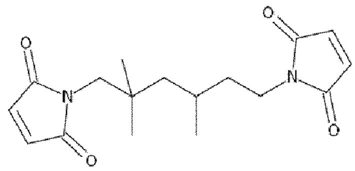 | 318.4 | 2 |
| BMI-689 (Designer Molecules) | 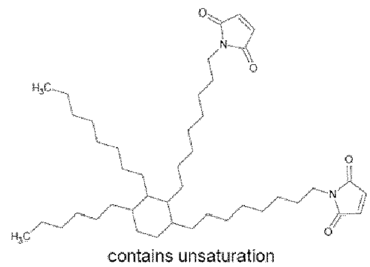 contains unsaturation | 689 | 2 |
| BMI-1400 (Designer Molecules) | 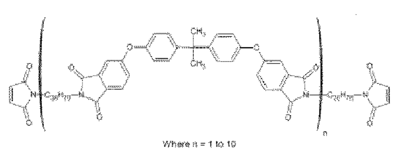 Where n = 1 to 10 | 1764 | 2 |
| BMI-1700 (Designer Molecules) | | 2734 | 2 |

The chemical reversible reaction which occurs between the furan and maleimide functional groups of the furan-functionalized polyether amines and the maleimide-containing monomers is illustrated in Figure 1. In this reaction step, conductive fillers and/or fillers can be added to the mixture, thereby obtaining the conductive self-healing composite materials of the invention.

The furan-functionalized polyether amine (FF PEA), the maleimide-containing (MI) monomer (e.g. DPBM) in a stoichiometric ratio r and a radical scavenger (e.g hydroquinone) are mixed using a solvent (e.g. chloroform) and homogenization thereof is performed. A filler (e.g. modified montmorillonite nanoclay) is added in a selected quantity to the monomer solution and mixed for 2 more hours. Subsequently, a selected quantity of conductive filler (e.g. carbon black) is added to the solution and mixed using a mechanical mixer for 5 minutes. Finally, the polymer composite is formed through solvent casting into a mold and subsequent solvent extraction in a vacuum oven at room temperature for 24 hours. For characterization, the composites are shaped in a mold through injection molding to obtain uniform sheets of 1 mm in thickness.

Unless provided otherwise, a stoichiometric ratio r between maleimide and furan moieties of 0.6 was used for the examples below.

When maleimide-containing monomers are used that are liquid at room temperature, the use of a solvent may be omitted.

The results described below were obtained for carbon black produced by Imerys: Ensaco 260G (CB 260G)

and Ensaco 360G (CB 360G). The results described below were obtained for organo-modified montmorillonite nanoclay produced by Southern Clay: Cloisite 15A (C15A) and Cloisite 30B (C30B).

*Filament and fibre extrusion*

The electrically conductive self-healing composites are extruded into 0.5 mm fibres using an in-house developed piston extruder. This device is designed for small scale extrusion of about 5 g and has an interchangeable nozzle to be able to extrude different fibre diameters. For these examples, a nozzle size of 0.8 mm was selected. The extruder is connected to a fixed bench vise that can be turned manually to extrude the fibres. The nozzle contains a cylindrical thermocouple and is enclosed by a 150 W band heater. The temperature is controlled using a commercial PID-RS-S-48 ramp/soak controller. The fibres are extruded at 112 °C. After extrusion, the fibres are left to rest for at least 24 hours to reach equilibrium before testing.

The surface of the fibres was analyzed using scanning electron microscopy (SEM). The fibre is very smooth and there are few surface defects visible. Fibres are obtained with an average diameter of about 500 μm.

The electrically conductive self-healing composites were extruded into filaments (e.g. diameter of 2.8 mm) using a single screw filament extruder. These filaments are then used to print 2D and 3D structures to embed sensors and heater elements in robotics and electronics.

Examples of composite materials only containing a conductive filler are listed in Table 3.

*Table 3. Examples of composite materials only containing a conductive filler*

| | FF PEA | MI mono mer | conductive filler | conductive filler loading (wt%) | filler | filler loading (wt%) | electrical conductivi ty (S/M) |
|---|---|---|---|---|---|---|---|
| Example 1 | F5000 | DBPM | / | / | / | / | / |
| Example 2 | F5000 | DBPM | CB 360G | 5 | / | / | $2.4\ 10^{-3}$ |
| Example 3 | F5000 | DBPM | CB 360G | 7.5 | / | / | $4.6\ 10^{-1}$ |
| Example 4 | F5000 | DBPM | CB 360G | 10 | / | / | $3.6\ 10^{0}$ |
| Example 5 | F5000 | DBPM | CB 360G | 15 | / | / | $2.0\ 10^{1}$ |
| Example 6 | F5000 | DBPM | CB 260G | 10 | / | / | $2.0\ 10^{-6}$ |
| Example 7 | F5000 | DBPM | CB 260G | 15 | / | / | $3.6\ 10^{-2}$ |
| Example 8 | F5000 | DBPM | CB 260G | 20 | / | / | 2.7 10° |

***Electrical conductivity* as a *function of conductive filler loading***

The electrical conductivity of the composites increases by increasing the carbon black loading. This increase in electrical conductivity is most pronounced between 5 and 7.5 wt% Ensaco 360G (Figure 3B and Example 2 vs. Example 3 in Table 3) and between 10 and 15 wt% for Ensaco 260G (Figure 3A and Example 6 vs. Example 7 in Table 3), corresponding to the formation of a percolated network of carbon black particles in the self-healing polymer matrix for carbon black loadings above 5 wt% of CB360G and above 15 wt% of CB260G, leading to an electrical conductivity above 0.1 S/m for the composites.

The electrical conductivity or resistivity that is required for the application depends strongly on the geometry (cross-section and length) of the designed structure, as the total resistance of the structure will determine current response upon application of a certain potential difference. As a rule of thumb, a threshold of 0.1 S $m^{-1}$ is acceptable, while an electrical conductivity above 1 S $m^{-1}$ is preferred for the intended flexible electronic devices. For complex sensor networks an electrical conductivity of around 10 S $m^{-1}$ may be required, given the small diameter and large length of the sensor fibres.

***Mechanical properties***

The incorporation of carbon black into the self-healing polymer matrix, has a stiffening and strengthening effect on the mechanical properties, as seen from an increase in Young's modulus and fracture stress and strain in tensile tests (Figure 2A). Higher filler loadings of carbon black result in higher mechanical stiffness for the same self-healing Diels-Alder polymer matrix

***Healing efficiency* as *a function of (conductive) filler loading***

The mechanical self-healing efficiency was evaluated by tensile tests on samples cut from the sample perpendicularly to the healed cut.

The mean healing efficiencies were calculated as the ratio of the fracture strains and stresses of the samples that were cut and healed versus the fracture strains and stresses of the reference samples.

All compositions with carbon black only were tested in two healing conditions, both at room temperature and at 90 °C. Room temperature healing was not feasible for these materials. Unfortunately, even heating the samples to 90 °C resulted in healing efficiencies below 60%, and thus a non-satisfactory level of healing. The presence of high loadings of carbon black drastically reduces the segmental mobility of the polymer chains, thereby negatively impacting the healing behavior.

***Addition of* a *(second) filler***

To overcome the issue of reduced self-healing efficiency of the conductive self-healing composites, a nanoclay filler was added. The addition of nanoclay to the composite material induces a volume exclusion effect, where the carbon black particles are no longer homogeneously dispersed in the matrix. At low conductive filler contents, it has been described that the conductive particles form a halo around the nanoclay instead, thus creating more electrically conductive pathways (Etika et al. Carbon 2009 47, 3128-3136).

Examples of composite materials with a conductive filler and a (second) filler are listed in Table 4.

*Table 4. Examples of composite materials with and without a (second) filler*

| | FF PEA | MI monomer | conductive filler | conductive filler loading (wt%) | filler | filler loading (wt%) | electrical conductivity (S/M) |
|---|---|---|---|---|---|---|---|
| Example 3 | F5000 | DBPM | CB 360G | 7.5 | / | / | $4.6\ 10^{-1}$ |
| Example 3a | F5000 | DBPM | CB 360G | 7.5 | C15A | 0.5 | $4.9\ 10^{-1}$ |
| Example 3b | F5000 | DBPM | CB 360G | 7.5 | C15A | 1.0 | $9.0\ 10^{-1}$ |
| Example 3c | F5000 | DBPM | CB 360G | 7.5 | C15A | 1.5 | $1.5\ 10^{0}$ |
| Example 4 | F5000 | DBPM | CB 360G | 10 | / | / | $3.6\ 10^{0}$ |
| Example 4a | F5000 | DBPM | CB 360G | 10 | C15A | 0.5 | $4.3\ 10^{0}$ |
| Example 4b | F5000 | DBPM | CB 360G | 10 | C15A | 1.0 | $5.2\ 10^{0}$ |
| Example 4c | F5000 | DBPM | CB 360G | 10 | C15A | 1.5 | $6.2\ 10^{0}$ |
| Example 7 | F5000 | DBPM | CB 260G | 15 | / | / | $3.6\ 10^{-2}$ |
| Example 7a | F5000 | DBPM | CB 260G | 15 | C15A | 0.5 | $5.4\ 10^{-2}$ |

(continued)

| | FF PEA | MI monomer | conductive filler | conductive filler loading (wt%) | filler | filler loading (wt%) | electrical conductivity (S/M) |
|---|---|---|---|---|---|---|---|
| Example 7b | F5000 | DBPM | CB 260G | 15 | C15A | 1.0 | $3.1\ 10^{-1}$ |
| Example 7c | F5000 | DBPM | CB 260G | 15 | C15A | 1.5 | $8.0\ 10^{-1}$ |
| Example 8 | F5000 | DBPM | CB 260G | 20 | / | / | $2.7\ 10^{0}$ |
| Example 8b | F5000 | DBPM | CB 260G | 20 | C15A | 1.0 | $3.8\ 10^{0}$ |

***Influence of the (second) filler on the electrical conductivity***

The addition of nanoclay as a secondary filler to the polymer composite system enhances the electrical conductivity of the so-formed hybrid composites in a certain carbon black and nanoclay loading range. At lower carbon black loadings, the effect of the filler (nanoclay) on the electrical conductivity is most pronounced. Figure 3A shows the enhancement of the electrical conductivity of a composite with carbon black Ensaco 260G for increasing loadings of the secondary filler Cloisite 15A. Similar results were obtained by adding Cloisite 15A to Ensaco 260G filled composites, as shown in Figure 3B.

Higher conductivities are obtained at fixed loading of the conductive carbon blacks. At the same time, similar electrical conductivity is now achieved at lower carbon black loadings. Due to the overall increase in electrical conductivity with addition of the secondary filler, especially in the percolation region, the electrical conductivity required for, e.g., flexible electronics is reached at lower filler loadings.

***Influence of the (second) filler on the mechanical properties***

At the same loading of the electrically conductive filler, the second filler has a negligible effect on the mechanical properties up to 1 wt% and a slight stiffening effect at higher filler loadings for large strain behavior (Figure 2B and Figure 2C for 7.5 wt% and 10 wt% CB360G, respectively). Because of a reduction of the total filler load to reach a similar level of electrical conductivity, the stiffening influence of the fillers on the mechanical properties can be reduced. With a Young's modulus (linear regression between 0-5% strain, n=4) of 8.4 $\pm$ 0.9 MPa, this composite is less stiff than the one with 30 wt% carbon black, which is beneficial for the application in flexible sensors for soft robotics.

***Influence of the (second) filler on the self-healing efficiency***

The healing efficiency for the Young's modulus and for the fracture strain for composite materials containing both a conductive filler and a (second) filler is shown in Table 5.

*Table 5. Healing performance of DPBM-F5000 r=0.6 composites after healing at 90 °C for 1 hour*

| | conductive filler | conductive filler loading (wt%) | filler | filler loading (wt%) | mechanical self-healing efficiency | |
|---|---|---|---|---|---|---|
| | | | | | $\eta_E$(%) | strain (%) |
| Example 1 | / | / | / | / | 78 | 97 |
| Example 2 | CB 360G | 5 | / | / | 71 | 96 |
| Example 3 | CB 360G | 7.5 | / | / | 106 | 133 |
| Example 3a | CB 360G | 7.5 | C15A | 0.5 | 85 | 83 |
| Example 3b | CB 360G | 7.5 | C15A | 1.0 | 88 | 85 |

(continued)

| | conductive filler | conductive filler loading (wt%) | filler | filler loading (wt%) | mechanical self-healing efficiency | |
|---|---|---|---|---|---|---|
| | | | | | $\eta_E$(%) | strain (%) |
| Example 3c | CB 360G | 7.5 | C15A | 1.5 | 100 | 92 |
| Example 4 | CB 360G | 10 | / | / | 56 | 137 |
| Example 4a | CB 360G | 10 | C15A | 0.5 | 72 | 177 |
| Example 4b | CB 360G | 10 | C15A | 1.0 | 81 | 214 |
| Example 4c | CB 360G | 10 | C15A | 1.5 | 74 | 86 |
| Example 5 | CB 360G | 15 | / | / | 18 | 44 |

For a 10 wt% CB360G loading, the healing efficiency increases with the nanoclay content, reaching a maximum value of 80% at 1 wt% C15A (Example 4b). For the 10 wt% CB360G and 1 wt% C15A composition, also the best recovery of the fracture strain of the healed sample is observed (214%), also recovering more than for the same carbon black content without nanoclay (137%). The tensile test curves for the composites with 7.5 wt% and 10 wt% CB360G and different amounts of nanoclay show a very good recovery of their tensile behavior.

The conductivity self-healing efficiency was evaluated by measuring the electrical conductivity of rectangular samples, which were damaged by cutting them in half and healed for 1 hour at 90 °C. The conductance of the healed samples showed 57% recovery.

***Interfacial bonding***

The following section describes the interface between the conductive self-healing composite and the non-conductive self-healing elastomer. The matrix polymer (DPBM-FT5000 r=0.5) employs the same Diels-Alder chemistry as the conductive composite DPBM-FT5000 r=0.6 + 20 wt% CB260 + 1 wt% C15A (Example 8b) and consequently the two can be bonded together via a heat-cool cycle.

To illustrate this, multi-material samples were prepared where both networks were joined by subjecting them to a heat-cool cycle at different temperatures, below their $T_{gel}$ to preserve the shape of the specimens. At higher temperatures, more thermoreversible bonds break to be reformed over the interface and the chemical reaction kinetics become faster, leading to a stronger connection.

For healing and fusing purposes, it should be taken into account that the neat polymer matrix and the conductive composite show a different rheological behavior. The slightly higher stoichiometric ratio of the composite (r=0.6) leads to a gel transition temperature $T_{gel}$ of 105 °C, whereas that of the neat matrix material is 95 °C. The healing temperature should be kept below the lowest $T_{gel}$ to ensure that both materials keep their mechanical stability. Samples of the pristine matrix and the composite were fused at 80 °C or 90 °C, for 45 minutes. Each sample was strained perpendicular to the interface at a rate of 60 % $min^{-1}$ until failure.

It was shown that the samples of the pristine matrix and the composite fused at 90 °C do not only fail at higher strains, they also do not fail at the interface between both materials, while the samples fused at 80 °C failed at the interface. Similar to previous work, this indicates a near-perfect bond is formed at 90 °C that is stronger than the weakest of the two materials, i.e., the neat polymer matrix. As a sufficiently strong interface enhances the sensor response, as it avoids unwanted delamination and failure, all fusion and healing procedures were performed at 90 °C.

***Applications of the conductive self-healing composites***

Self-healing strain sensor

This section details the development of a self-healing strain sensor. Numerous types of soft strain sensors already exist based on different geometries, however as a first study and demonstration of the novel technology discussed in this document, one of the simplest strain sensors geometry was selected: a straight conductive fibre integrated into

an non-conductive insulating matrix. Straining the fibre changes the resistance, from which the strain can be deduced, the resistance of the extruded fibers is 1726 ± 381 Ω/mm. The conductive self-healing composite was extruded into fibres with a thicker diameter (± 0.5 mm) using a customized piston extruder. Although in literature fibres with smaller diameters are used, having a diameter of 0.3 mm or lower, the choice for a thicker diameter is a design consideration to reduce the probability and impact of misalignment during the healing process. With such a fibre embedded in a non-conductive matrix material, it is not only possible to measure the deformation, but also to determine whether the matrix or fibre is damaged.

In what follows, first the different steps in the manufacturing process of the self-healing strain sensor are elaborated. Next, the sensor is characterized electrically and mechanically before illustrating the recovery of these properties after the healing process of macroscopic damages.

Manufacturing of the strain sensor

The strain sensor comprises a thin fibre of the novel developed conductive Diels-Alder polymer composite within a non-conductive self-healing matrix of DPBM-FT5000 (r=0.5). The sensor is manufactured using a two-step process: fibre extrusion followed by embedding.

For the sensor fibre embedding, 5 cm long fibres are embedded in the insulating matrix polymer (DPBM-FT5000-r=0.5) in a laser cut acrylic mold that can host up to nine sensors. Molex Micro-Fit crimp terminal connectors are crimped over the ends of the conductive fibres, to ensure the fibres can be connected to standard jumper wires. After placing a bottom layer of insulating non-conductive DPBM-FT5000-r=0.5 material in the mold, using the terminal connectors both ends of the fibres are fitted straight in the acrylic mold. Finally, a top layer of DPBM-FT5000-r=0.5 sandwiches the fibres. Next, the mold is placed in an oven at 100 °C, which is above the $T_{gel}$ of 95 °C of the matrix material, but below the $T_{gel}$ of the fibres. Consequently, after 30 minutes the matrix degels, starts to flow and encapsulates the fibre. Although it is only slightly below the $T_{gel}$ of the fibre (105 °C), the fibre keeps its shape as there is no stress in the material that could result in flow. The newly formed sensors are taken out of the oven and left to cool down at room temperature. After 24 hours, they are removed from the mold and cut into separate sensors.

*Electrical and response characterization of the strain sensor*

To investigate the sensor response function, the relationship between strain and resistance, a non-embedded fibre is subjected to a linearly increasing strain (10%/min), while the resistance is monitored using a Keysight E4980AL LCR meter. The fibre is not embedded in the matrix, but only fitted with crimp connectors at both ends. The fibre is glued to cardboard on both ends prior to testing to avoid damage due to the clamping force. In the resistance-strain relationship, three zones (I, II and III) are identified in the electrical response of the fibre (data not shown), corresponding to different regimes as described by Flandin et al. (Polymer 2001 42, 827-838). In the first small zone I (0-1% strain) the resistance slightly increases as the paths between conductive particles and/or agglomerates become larger upon straining. In the next zone II (1-26% strain), the resistance drops with increasing strain due to improved inter-particle contacts in directions near perpendicular to the straining direction. Finally, the sensor undergoes recoverable matrix-particle damage interactions when subjected to high strains in zone III (strain >26 %), and the resistance increases again to above the original resistance. In fact, Flandin *et al*. defined a fourth zone in the resistivity-strain relationship of a carbon black filled elastomer. This 'depercolation' zone IV was not identified during this test. All tested fibres broke at one of the points where they are glued to the cardboard. Possibly the fourth regime can be witnessed in the sensor fibres if a different clamping method is used. This does not inhibit the further study of the sensors, as the relation between resistance and strain requires a bijection to keep the sensor readout straightforward.

When the sensor fibre breaks, the resistance becomes infinite and consequently the sensor can be used for rudimentary damage detection. The resistance-strain relationship presents a surjection for the entire strain interval, including the three zones, as for multiple strain values, the same resistance value can be measured. This, however, is not problematic, when selecting a strain interval, e.g. zone II, as operating range. Although high strains are present in soft robotics upon actuation (100% for pneumatic systems), these are often localized, while soft strain sensors are mostly, integrated in section in which the strains are more limited (<30%). Consequently, in this paper, zone II was selected as operating strain window of the strain sensor. After characterizing the strain-resistance behavior of the fibre, the embedded sensors are characterized as well.

The sensitivity of the fibre and sensor can be derived based on the gauge factor (GF), one of the most widely used characteristics of (piezoresistive) strain sensors. This dimensionless number is determined using the formula:

$$GF = \frac{\Delta R/R_0}{\varepsilon} = \frac{(R - R_0)/R_0}{\varepsilon}$$

with resistance R, initial resistance Ro, and strain ε. However, this relationship can only be used to reconstruct the strain when the response is approximately linear. The sensors developed in this work have overall a non-linear strain-resistance response, which renders GF useless for reconstruction purposes. However, it remains useful as a way of comparing the sensitivity of different sensors in the literature. The average cycle (data not shown) shows again that the resistance starts to increase very slightly at strains above 26%. Because determining a single GF over the domain 0-30% has no meaning, two GFs were determined using the 'broken stick regression' approach. The break point divides the domain in two parts and is calculated such that the angle between both linear regressions is maximal. The GFs are calculated by taking the average over the last 10 cycles of the test, as the sensor is then in steady state. The break point lies at 10 ± 2% strain, the GFs in both domains amount respectively to 7.2 ± 1.3 and 0.26 ± 0.03 (n=9). Even though the second GF is on the lower end of the spectrum, the values correspond to common GF values found in literature for elastomeric sensors (typically 1 - 102).

*Healing of the strain sensors*

The recovery of the mechanical and electrical properties of the embedded sensor was experimentally validated. Healing was investigated for two types of damages. Firstly, cuts or tears in the matrix, in close proximity to the sensor fibre but leaving the sensor fibre untouched (Type 1). Secondly, more severe cuts can lead to damage of both matrix and sensor fibre (Type 2). In this case, the electrical properties of the sensor are sharply affected, and the resistance of the sensor will increase to infinity. Both types of damages were induced by cutting strain sensors using a scalpel blade. Two sensors were damaged by solely cutting the matrix (Type 1). As damage Type 2 is the most severe damage situation, and therefore better suited to verify the healing ability of the sensor, six sensors were damaged in this way. One sensor was not damaged and used as a reference.

Prior to initiating the healing procedure, the fracture surfaces of the sensor should be recontacted and the fibre pieces should be aligned, otherwise effective healing of the sensor cannot be expected. Contact and alignment of the fibre can be verified by measuring the resistance: upon adequate contact, the resistance will drop to within the same order of magnitude as the original value (105 ohm). Consequently, the electrical signal can be used to assist alignment and healing. To illustrate this, two severely damaged sensors were healed after deliberately making insufficient contact and misalignment, whereas another four were properly aligned and recontacted. These damaged sensors were healed by subjecting them to a temperature of 90 °C for 45 minutes. The reference sensor underwent the same temperature profile. A bad contact (misalignment) leads to a value that is several orders of magnitude higher (107 ohm), even after healing. Microscope images revealed that there is a small gap between the ends of the sensor fibre, causing the higher resistance.

Additional to the recovery of resistance at rest, the recovery of the sensor performance was investigated by characterization of the healed sensors, subjecting them to static tensile testing and cyclic testing, as done prior to damage. All sensors show again a similar characteristic as before the damage. The gauge factors, after healing, are now determined as 11.4 ± 6.0 and 0.41 ± 0.10 (n=7), with the break point at 12% strain.

It is clear that after healing this severe damage, the sensors are healed well and recovered their original function.

*Application of the strain sensor in soft robotic wearables*

Soft strain sensors are also promising for smart robotic wearables, including artificial skins and smart gloves, used for health and performance monitoring or as haptic devices. Although the human skin can withstand strains up to 150%, the strains during normal functioning are limited to lower strains. The suitability of our sensors and the materials involved in them foe soft robotic wearables is illustrated by a first feasibility study, in which self-healing strain sensor affixed to the dorsal side of the index finger of a test subject.

Upon folding and straightening the sensor cyclically, the resistance drops when the sensor bends and increases again when it is straight. This confirms that the sensor operates in zone II in this application. Zone III can also be used in soft robotics or wearables, when the sensor is integrated in sections that are subjected to high strains (30%) or by pre-straining the fibre prior to embedding it in the matrix. Although pre-straining fibres for strain sensors is commonly done, the reversible nature of the Diels-Alder crosslinks in self-healing polymers would over time relax this pre-strain, leading to a sensor for which the characteristics undesirably evolve over time. Cyclic measurements allow more insight in the dynamic behavior of the strain sensor. The strain sensors were exposed to a sinusoidal strain with strain amplitude of 30% and a period of 10 s, for 100 cycles each. Hysteresis, observed as a loop in the relation between the relative resistance and the strain, is a well-known phenomenon and common issue in resistive carbon black based sensors. Both the resistance-strain relation in loading and unloading indicate that the hysteresis of the self-healing sensor is limited. However, it is illustrated that the sensors exhibit non-negligible drift, caused by the viscoelastic relaxation of the polymer, also a well-known effect for similar polymers. This slow relaxation can be illustrated by subjecting sensors to a quasi-static strain pattern. For an embedded strain sensor in an actuator of a gripper, this could represent a cyclic

grabbing, holding and releasing task. The sensor is repetitively strained to 20% and released back to its initial length. Each position was held for 30 minutes. The sensor shows a slow relaxation effect when recovering the strain to the initial position, which could also be noticed when applying it for human finger motion detection. This relaxation results from the dynamic and viscoelastic nature of the reversible polymer network in combination with the 3D-network formed by the carbon black particles above the percolation threshold. Nevertheless, a thorough study of the relationship between the mechanical and electrical relaxation of this sensor is outside the scope of this document.

The observed time-dependent behavior makes it challenging to model the sensor analytically, therefore researchers proposed solutions to model soft polymeric sensors based on neural networks. Although the development of a full analytical model is outside the scope of this work, we propose to fit a model on the sensor when it goes towards steady state. For the cyclic measurements, a model is fitted based on the first half of the dataset, and applied to reconstruct the strain for the second half. First, the drift is removed from the resistance measurement by normalizing the data between the upper and lower enveloping curve. After the normalization, the graph $\varepsilon(R)$ is fit with a second order rational function (1 zero, 2 poles) and used for the reconstruction. When reconstructing the strain, it can be seen that the prediction accuracy is reasonable. Due to the drift of the sensors, this approach tends to slightly overestimate the strain over time. After 50 cycles, the maximal residual error is 7%.

*Application of the self-healing strain sensor in a soft tendon-driven gripper*

The concept of the self-healing strain sensor that uses the self-healing conductive composites is validated by embedding it in a soft tendon-driven finger where it acts as a bending sensor. By pulling the tendon, its length is shortened, and the finger bends. It consists out of two parts that are (compression) molded separately: the phalanges structure and the sensorized backbone, in which the sensor fibre is placed in a U-shape. Both parts are fused together at 80 °C for 30 min.

The embedded sensor is characterized using an in-house developed set-up that consists of a tendon control system, a camera to measure the bending angle, and an LCR meter to record the resistance of the sensor. The finger is characterized by studying the resistance as a function the bending angle to follow the deformation behavior as a result of the finger actuation. During the characterization, the finger was kept horizontally at rest and bent upwards. The bending angle is defined as the angle between the horizontal resting position, and the line drawn through the base of the finger (where it is clamped) and the tip.

The finger reaches a maximal bending angle of 85° when actuated. The sensor gives a good signal and the resistance decreases when bending, as it is located on the outer side of the finger, and therefore in tension. When looking at the resistance in function of the bending angle during the same test, some hysteresis is noticeable. The finger is subjected to 100 actuation cycles up to the maximal bending angle. The sensor shows a good response to the bending. The sensor in the pristine finger shows only limited drift.

The finger is repeatedly subjected to various damage modes and subsequently healed at 90 °C for 45 minutes. The same tests are repeated after each damage-healing cycle. After recovering from the three damages shown, both the sensor and the finger recover their function. After three damage-healing cycles, the sensor drift has increased.

Four of these fingers were combined in a self-healing sensorized gripper. The four fingers of the gripper are pressurized simultaneously, and it is able to grasp objects of different sizes.

Self-healing touch sensor

As mentioned before, soft grippers find major applications in agriculture, food, and collaborative manufacturing, in which they pick and place objects with various shapes and sizes, including fruits and vegetables. When grasping, in many cases the robot desires feedback to determine whether or not it is actually touching or holding an object and what the orientation of the object is. This detection can be performed by a touch or force sensor, embedded in the flexible structure of the soft gripper. Below, we propose a capacitive force sensor, entirely manufactured from self-healing polymers, which can recover from this type of damage.

The proposed capacitive sensor consists of a sandwich structure, with two self-healing conductive composite layers (DPBM-FT5000-r=0.6 + 20 wt% CB260G + 1 wt% C15A) separated by a self-healing dielectric layer (DPBM-FT5000-r=0.5) (data not shown). This 3-layer sandwich is encapsulated within the non-conductive matrix material to isolate it. The conductive layers are manufactured using compression moulding: these sheets are approximately 1 mm thick and have a protruding connection piece. The connection with the electronics is made using a crimp connector at each conductive layer. A third 0.5 mm thick layer forms the dielectric between the plates and is made from the insulating DPBM-FT5000-r=0.5 material. The sandwich structure is merged together via a heat treatment at 100 °C for 45 minutes to form a strong connection.

*Electrical and response characterization of the touch sensor*

The capacitance of this sensor can be approximated using the equation for an ideal parallel plate capacitor:

$$C = \frac{k\varepsilon_0 A}{d}$$

Where k.$\varepsilon_0$ = 40.069 pF/m is complex permittivity of the dielectric material (DPBMFT5000-r=0.5 at 1 kHz), A = 314 $mm^2$ is the area of the plates, and d = 0.5 mm is the distance between the plates. This results in a capacitance of 25 pF, which is quite close to 22.5 pF, the measured value of the sensor at rest.

To evaluate the touch response of the sensor, a Keysight E4980AL LCR meter was used to measure the capacitance of the force sensor while a dedicated test setup exerts force (compression). The LCR meter is calibrated both in open and short clamp configuration, all measurements are performed at 1 kHz. The capacitance in function of the applied compression force is measured using a dynamic load. A 0.1 Hz sinusoidal force was applied to the sensor oscillating between 2.5 N and 7 N. It is indicated (data not shown) that the sensor response is steady within consecutive cycles, but that there is a non-negligible drift when observing a larger timescale. This is again linked to the dynamic character of the self-healing polymer network. The response for selected cycles shows, both in loading and unloading, no notable hysteresis (data not shown). The response is linear, and the sensitivity can be expressed by following formula:

$$\text{sensitivity} = \frac{\Delta C}{\Delta F}$$

The obtained data results in a sensitivity of 0.026pF/N.

A quasi-static test allows to examine the relaxation behavior. When applying a 5 N static load, the sensor responds immediately, after which there is some relaxation and drift noticeable. This is caused by the viscoelastic behavior of the DPBM-FT5000-r=0.5 dielectric layer. The drift can be characterized as:

$$\text{drift} = \frac{\Delta C}{C_{\text{max}}}$$

Since the sensor exhibits an almost linear behavior ($r^2$ = 0.9919), it is possible to use the sensitivity as a proportionality factor to reconstruct the force from the capacitive measurement. The last 10 cycles are used to predict the next 100 cycles. The drift for this type of sensor is lower, and thus is the reconstruction valid over a larger timescale without sacrificing the precision of reconstruction. The error of reconstruction is shown to be very limited.

*Healing of the touch sensor*

To verify the self-healing of the touch sensor, a large cut is made through all the layers of the sandwich structure. It has to be noted here that even if the sensor is completely cut in two, it does not lose its function (given that both connectors are on the same half). The area, and thus capacitance, will be changed, but it will continue to work as a touch sensor.

The sensor was subjected to the same healing procedure as the strain sensors. It was heated at 90 °C for 45 minutes before leaving it to rest for 24 hours at room temperature. It has been shown that the sensor recovers its function after this damage-healing cycle, both in a dynamic and a quasi-static test (data not shown). The capacitance of the sensor has increased slightly, which can be due to stray capacitance from the environment, and the drift is now 0.13 %.

<u>Self-healing heaters allowing actuator healing, damage detection and healing monitoring</u>

For non-autonomous self-healing materials, typically an external device such as a heat or a light source is used to trigger the healing procedure. Using light is typically limited to thin, soft robotic structures due to a limited penetration depth (up to 0.5 mm). Therefore, most reversible covalent elastomers in soft robotics require heat to heal, which is provided by an external device (e.g. oven).

Despite being the most common approach for healing activation, external heating does not allow for local heating, and as such it is not energy efficient. In addition, some parts of the robotic system, like electronics, cannot be heated to high temperature. Therefore, in many self-healing soft robotics applications local heating/healing will be desired.

In robotics, a damage detection (see above) and stimulus providing system (e.g. heater) can be integrated due to the presence of a power supply and a (micro) controller. As such, a soft robot with an integrated stimulus-providing system can heal without human intervention, even though being constructed out of non-autonomous self-healing polymer. In addition, using this approach, healing of partially damaged components can be postponed until mission completion (self-healing-on-demand). In such a scheme, prior to healing, cleaning and alignment can be checked for an optimum recovery.

Joule-effect flexible heaters have demonstrated various practical applications in wearable devices for healthcare, variable stiffness structures for foot-drop treatment, and electrothermal actuators.

What is shown, is a healable heater embedded in a bending soft pneumatic actuator, being able to repair itself and the actuator from large macroscopic damages, such as being cut in two, and when damaged, the heater localizes the heating at that site.

*Experiments regarding conductivity and mechanical property restoration in cyclic damage-healing experiments validate its functionality.*

In addition to both matrix and composite being healable, the covalent bonds between the different Diels-Alder materials provides a strong interfacial connection between the heater and the actuator and prevents debonding. In addition, these Diels-Alder materials are recyclable: they can be remolded or dissolved by an appropriate solvent and recasted, reducing the environmental footprint of the system.

The actuator is constructed out of the non-conductive self-healing polymer DPBM-FT5000-r=0.5. The self-healing electrical heater is made of the self-healing electrically conductive composite DPBM-FT5000-r=0.6 with 20 wt% of CB260G and 0.5 wt% C30B nanoclay.

As shown above, the hybrid composite is prepared by mixing the carbon black and the nanoclay with the matrix, and poured in a one-side mold and placed in vacuum at 90 °C for 24 hours. The cast sheets are then ground and put inside the inlet of a two-side pre-heated mold at 120 °C for 30 minutes. Then the particles are pressed and gradually cooled. Finally, two wires are connected to each of the samples using MG Chemicals 9410 electrically conductive adhesive (data not shown).

Heater performance: For the Healing Quality Assessment, a four-step damage and healing process is applied, after which the healing efficiency is investigated:

- the heater is completely cut through in the middle using a scalpel blade;
- the two pieces are manually recontacted;
- the electrical voltage is applied over the heater until 85-95 °C is reached, and this temperature is maintained for a pre-defined time. This period when current flows through the heater is only 15 minutes for conductivity healing efficiency evaluation (the heater reacts very fast in conductivity recovery) and 45 minutes for mechanical restoration analysis;
- finally, the heater is kept for one day at room temperature, giving time to reform the Diels-Alder bonds and fully recover the mechanical properties.

By comparing the heater resistance before damage and after healing, as well as the strain and stress at break, the healing efficiency is evaluated for the conductivity and the mechanical properties. Additionally, to verify that the embedded heater can recover its functionality and that of the actuator, the trajectory and bending angle vs. pressure are compared before damage and after multiple damage-healing cycles.

*Heater control and heater resistance measurement approaches*

Side reactions and the resulting degradation in healing properties in Diels-Alder materials owing to overheating necessitates temperature control during the heat treatment process. Using a PID loop, the temperature is controlled by tuning the voltage input of a MOSFET, according to the feedback from a type-K thermocouple. To limit noise, direct contact of the thermocouples' junction with the heater is avoided by LOCTITE 315 thermally conductive/electrically insulation paste. In addition, to monitor the changes in resistance of the heater, a current measurement system, including a shunt resistor and an amplifier, is implemented. To compare the efficacy of internal Joule heating with heating by an external device, an LCR meter (Keysight E4980AL) was used to measure the resistance of damaged sensors while they are heated in an oven. A linear pressure controller system was developed to drive the bending actuator. The bending angle of the robot is measured via an intel REALSENSE motion tracking camera (data not shown).

*Resistive heater design*

Based on the Joule's law ($Q=RI^2t$) and specific heat formula ($Q=mc\Delta T$), the amount of energy Q produced by passing current I through a substance with resistance R, specific heat c and mass m, changes the temperature $\Delta T$. The

design of the heater is a compromise between the material's conductivity and healability (increasing the carbon black content to increase the conductivity compromises the healing efficiency, as shown above), the desired temperature for healing (85-95 °C), the size and topology of the heater that affect the resistance (R=ρl/A), and the required power supply. Considering the target robotic demonstrator, the size of the heater is chosen to be 1 mm × 10 mm × 60 mm (t × w × L).

*Composite heater characterization*

All characterization was performed at an ambient temperature of about 25 °C. Applying 30 V can increase the temperature of the heaters up to 90 °C in 8 minutes starting from room temperature (data not shown). However, as the power relates to the current squared ($P=RI^2$), this duration sharply decreases to less than three minutes with 35 V. To visualize the thermal behavior of the heaters, a FLIR One Pro thermal imaging camera was used. Keeping all the default parameters of the camera, the optimized distance between the camera and the heater was about 15 cm, using a thermocouple for calibration. It was shown that, except the sides, the heat is almost evenly distributed along the heater. Furthermore, owing to the higher amount of heat loss at the connectors, the sides are a bit cooler (data not shown).

When increasing the temperature, the resistance of the heater increases, which indicates that the heater is a Positive Temperature Coefficient (PTC) heater. A possible explanation is that inside of the composite, agglomerates of conductive parts are formed within the non-conductive matrix. Upon heating, the matrix expanses and the distance between the conductive agglomerates increases, leading to an increase in resistance. However, this doesn't mean that the material is unstable as this is a reversible and reproducible behavior. The heater shows a reversible behavior in cyclic heating between 15V and 25V in 8 minutes interval. Such a PTC composite can also be used as a temperature sensor when the resistance is properly calibrated with respect to temperature. This type of heater has many advantages in comparison with fixed-resistance heaters, as it reduces the risk of overheating when using voltage-based control and leads to more even heat distributions, lower power consumption and faster heating response. Furthermore, these PCT composites can also be used as temperature sensors when the resistance is properly calibrated with respect to temperature.

*Conductivity healing efficiency and recovery of the thermal performance*

To investigate the recovery of the conductivity and heating performance, heaters were cut in half and healed using either Joule heating or external heating for five damage-healing cycles (data not shown). In all the cycles, the resistance drops from the kilo-ohm scale (when brought back in contact) to a few hundred ohms in a few seconds, recovering the electrical conductivity to up to 90%. After 15 minutes, more than 95% of the conductivity measured before the damage is recovered. It is worth noting that the resistance further decreases during cooling, owing to the PTC phenomenon and the increasing thermo-reversible crosslinking of the network. After a day the conductivity is restored to near 100%. To benchmark the Joule-effect healing mechanism, its healing was compared with heating by an external device and one sample was healed in an oven. It was shown that at least 45 minutes is required to restore 95% of the conductivity. This number is reduced to 70% in the fifth damage-healing cycle. Note that the final healing efficiency also depends on how well the two damaged sides are aligned.

*Mechanical healing efficiency*

To assess the mechanical healing efficiency, the recovery of the mechanical properties by thermal healing, three samples were subjected to tensile tests: one pristine heater, one heater that was healed by Joule-effect, and one that was healed in an oven. Tensile tests were performed using a Tinius Olsen tensile tester using a 0.5%.s-1 strain rate. It was shown that in the tensile test none of the heaters have been broken at the healed damage site. After healing, heaters can be strained without fracture to more than 100% and bear over 1.6 MPa stress. The sample healed by the Joule-effect breaking at lower stresses than the two others, failing near the electrical connectors. These variations can originate, a.o., from the existence of bubbles or small defects inside the samples or from differences in the manual clamping in the tensile test setup.

*Self-healing conductive composite heater* as *damage detection and healing-monitoring sensor:* In a robotic system, the resistance can be checked during operation. As the resistance of the composite heater increases upon damage, typically towards the kiloohm region, the heater can be used as a damage detection. During heating, the damage location can be detected by checking the heat distribution. During healing, the resistance decreases towards the initial resistance, representing full recovery. Thus the heater can also be used as a healing monitoring sensor. Misalignment or incomplete healing leads to a higher resistance and can be detected by the heater as well.

To ascertain the functionality of the composite heater as a stimulus-providing system for self-healing soft robots, it was integrated in a bending pneumatic actuator.

The actuator demonstrator is based on the previously designed bending pneumatic actuators. It has a length,

height and width of 71 mm, 13.5 mm and 11.5 mm respectively. The wall thickness of this actuator is 1.75 mm. It is composed of two main sections: the air chambers (top) and a strip (bottom). When used in a soft gripper or bionic hand, the bottom surface of the strip will be in contact with the grasped objects, making it the most vulnerable part of the actuator. Hence, the heater is embedded inside this bottom strip (data not shown).

The air chambers are first manufactured via compression moulding of grinded elastomer. The heater is then sandwiched between layers of the DPBM-FT5000-r=0.5 self-healing elastomer and placed in an oven at 130 °C. At this temperature the material degels, flowing around the heater and providing excellent contact between the stacked sheets. The top and bottom part are joined by placing the top section on top of the bottom layer right after taking the embedded heater out of the oven and by leaving it for several hours at room temperature. Finally, for a better integrity, the entire actuator is heated for one hour at 80 °C. Upon cooling, the assembled parts are covalently bond together via strong covalent Diels-Alder bonds, which leads to robust interfaces inside the multi-material actuator.

*Soft robot performance recovery*

The actuator is characterized prior to damage and after five damage-healing cycles. This characterization of the actuator function is performed by tracking the fingertip trajectory and bending angle as a function of the over-pressure, increasing from 0 to 30 kPa in 8 seconds. To push the healing to its limits, the actuator and the embedded heater are completely cut in half. The two sides are brought in contact, measuring the resistance to align the parts. A voltage of 30-35 V is applied to increase the temperature until 90 °C is reached. Two types of damage (puncture and rupture) are made in the cell chambers and three times of cutting the finger in two are applied in the backbone of the finger, each time from a different location. Considering the environmental noise while the camera tracks the white markers, there is a clear correspondence in these graphs, confirming the healability of the robot with the Joule-effect heater.

## Claims

**1.** A self-healing, composite material comprising:

- A Diels-Alder polymer comprising the reaction product of a composition comprising a polymaleimide and a monomeric unit according to formula (I);

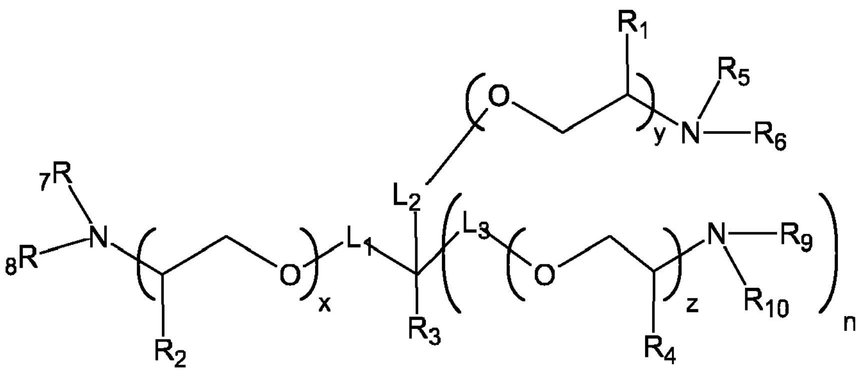

wherein;

$R_1$ to $R_4$ independently represent H or $C_1$-$C_4$ alkyl, in particular $CH_3$;
$R_5$ to $R_{10}$ independently represent H or A;
A independently represents a furan-comprising functional group;
$L_1$ to $L_3$ independently represent a direct bond or a divalent $C_1$-$C_4$ alkyl; in particular $-CH_2-$; n is 0 or 1;
x + y + z is an integer selected from 1 to 75; and
**characterized in that** both said polymaleimide and polyfuran monomeric unit comprise a functionality of at least 2 and **in that** the sum of the functionalities of both said polymaleimide and polyfuran is at least 4.6, and a maleimide-to-furan stoichiometric ratio between the polymaleimide and the monomeric unit ranges from 0.05 to 0.65;

- a conductive filler; and
- a filler.

2. The self-healing composite material according to claim 1, wherein said conductive filler is selected from the list comprising: carbon black, carbon fibres, graphene, carbon nanotubes, metal particles, polyaniline, polypyrrole.

3. The self-healing composite material according to anyone of claims 1 to 2, wherein said filler is a nanoclay.

4. The self-healing composite material according to anyone of claims 1 to 3, wherein said conductive filler is present in a range of 1-30 wt%, preferably 5-20 wt%.

5. The self-healing composite material according to anyone of claims 1 to 4, wherein said filler is present in a range of 0.5-5 wt%, preferably 1-3 wt%.

6. The self-healing composite material according to anyone of claims 1 to 5, further comprising a radical scavenger.

7. The self-healing composite material according to claim 6, wherein the radical scavenger is selected from the list comprising: hydroquinone, butylated hydroxytoluene, 4-tert-butylcatechol, methyl-p-benzoquinone.

8. Use of the self-healing, composite material as defined in anyone of claims 1 to 7 as self-healing material.

9. Use of the self-healing, composite material as defined in anyone of claims 1 to 7 in electronics, robotics or biomedicine.

10. Use of the self-healing, composite material as defined in anyone of claims 1 to 7 in the manufacturing of 1D, 2D or 3D structures, more particular in the manufacturing of robotic or electronics components.

11. Use of the self-healing, composite material as defined in anyone of claims 1 to 7 in a manufacturing method selected from the list comprising: filament extrusion, extrusion-based printing techniques, selective laser sintering, injection molding, compression molding, casting, soft lithography.

12. Use of the self-healing, composite material as defined in claim 11, wherein said extrusion-based printing techniques are selected from the list comprising: fused filament fabrication, direct ink writing and the like.

13. A 1D, 2D or 3D structure comprising the self-healing, composite material as defined in anyone of claims 1 to 7.

14. A method of healing a self-healing composite material according to any one of claims 1 to 7, said method comprising:

- realigning the fractured surfaces of the composite material, when bringing said surfaces into contact with one another; and
- heating the composite material to mild temperatures.

15. The method according to claim 14, wherein the self-healing may occur at temperatures about and between 60, 70 °C and 90, 100 °C, in particular about and between 65, 70 °C and 90, 95 °C.

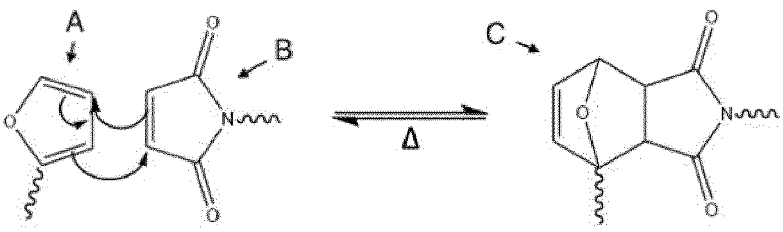


FIG. 1

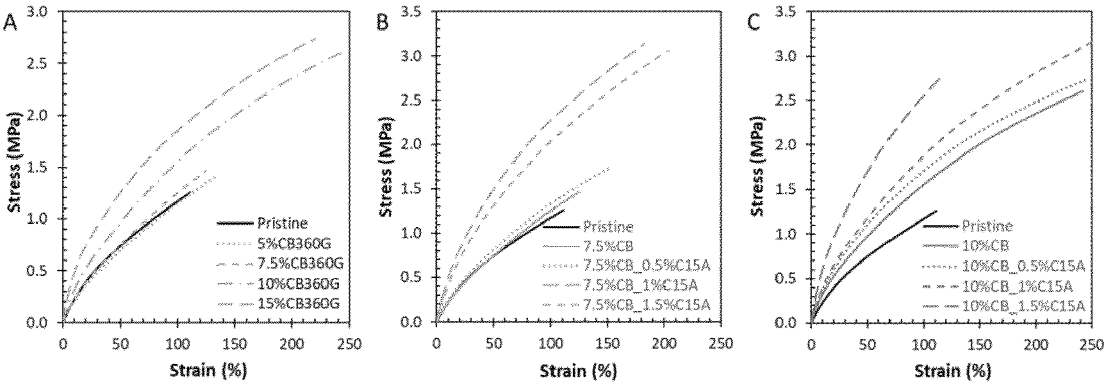
A
Stress (MPa)
Strain (%)
Pristine
5%CB360G
7.5%CB360G
10%CB360G
15%CB360G
B
Pristine
7.5%CB
7.5%CB_0.5%C15A
7.5%CB_1%C15A
7.5%CB_1.5%C15A
C
Pristine
10%CB
10%CB_0.5%C15A
10%CB_1%C15A
10%CB_1.5%C15A

**FIG. 2**

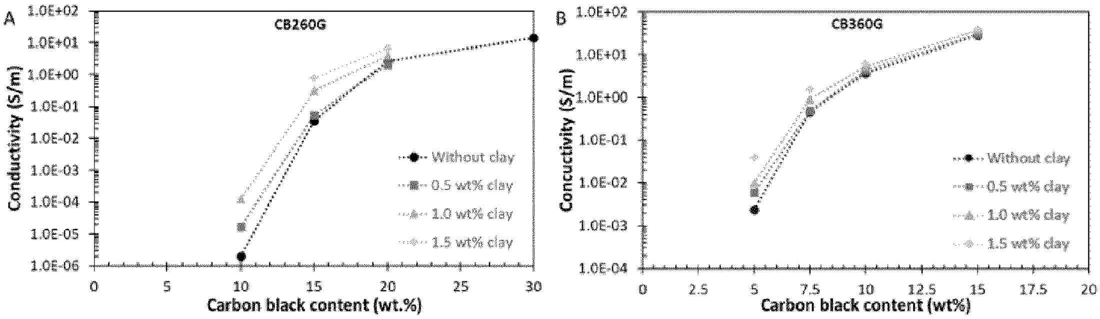
A
CB260G
Conductivity (S/m)
1.0E+02
1.0E+01
1.0E+00
1.0E-01
1.0E-02
1.0E-03
1.0E-04
1.0E-05
1.0E-06
0
5
10
15
20
25
30
Carbon black content (wt.%)
Without clay
0.5 wt% clay
1.0 wt% clay
1.5 wt% clay
B
CB360G
Concuctivity (S/m)
1.0E+02
1.0E+01
1.0E+00
1.0E-01
1.0E-02
1.0E-03
1.0E-04
0
2.5
5
7.5
10
12.5
15
17.5
20
Carbon black content (wt%)
Without clay
0.5 wt% clay
1.0 wt% clay
1.5 wt% clay

**FIG. 3**

Europäisches Patentamt
European Patent Office
Office européen des brevets

# EUROPEAN SEARCH REPORT

Application Number
EP 22 15 7830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 760 337 A (IYER SHRIDHAR R [US] ET AL) 2 June 1998 (1998-06-02) | 1,2, 8-10, 13-15 | INV. H01L23/482 C08G61/00 C08G59/32 B33Y70/00 C07B37/12 C09J163/00 |
| Y | * claims 1,2 * | 6,7 | |
| Y | ROELS ELLEN ET AL: "A Multi-Material Self-Healing Soft Gripper", 2019 2ND IEEE INTERNATIONAL CONFERENCE ON SOFT ROBOTICS (ROBOSOFT), IEEE, 14 April 2019 (2019-04-14), pages 316-321, XP033555733, DOI: 10.1109/ROBOSOFT.2019.8722781 [retrieved on 2019-05-24] | 6,7 | |
| A | * page 317 - page 318; figures 3,4 * * V. MATERIALS AND METHODS *; page 321 | 1-5,8-15 | |
| A | WANG XIAOFEI ET AL: "Preparation and properties of self-healing polyether amines based on Diels-Alder reversible covalent bonds", HIGH PERFORMANCE POLYMERS, [Online] vol. 31, no. 1, 10 January 2018 (2018-01-10), pages 51-62, XP055772221, GB ISSN: 0954-0083, DOI: 10.1177/0954008317750727 Retrieved from the Internet: URL:http://journals.sagepub.com/doi/full-xml/10.1177/0954008317750727> [retrieved on 2021-02-04] * page 53; figures 2,3 * | 1-15 | TECHNICAL FIELDS SEARCHED (IPC) B33Y H01L C08K |

-/--

The present search report has been drawn up for all claims

| Place of search | Date of completion of the search | Examiner |
|---|---|---|
| Munich | 4 August 2022 | Lindner, Thomas |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 22 15 7830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STRACHOTA BEATA ET AL: POLYMERS, vol. 11, no. 6, 28 May 2019 (2019-05-28), page 930, XP055772217, DOI: 10.3390/polym11060930 * Chapter 2.2 Synthesis of Monomers *; page 3 - page 5 * Scheme 6 * ----- | 1-15 | |
| A | US 2003/116272 A1 (AUBERT JAMES H [US]) 26 June 2003 (2003-06-26) * claims; figures 1,2; examples * ----- | 1-15 | |
| A | US 2019/322785 A1 (MENYO MATTHEW S [US] ET AL) 24 October 2019 (2019-10-24) * paragraph [0076] - paragraph [0077] * ----- | 1-15 | |
| A | US 6 281 314 B1 (TONG QUINN K [US] ET AL) 28 August 2001 (2001-08-28) * column 4, line 28 - line 48 * ----- | 1-15 | TECHNICAL FIELDS SEARCHED (IPC) |
| A | CN 104 745 133 A (WANG CHUANGUANG; XU JIE) 1 July 2015 (2015-07-01) * paragraph [0030] - paragraph [0037] * ----- | 1-15 | |
| A | JP 2006 335861 A (NIPPON ZEON CO) 14 December 2006 (2006-12-14) * paragraph [0037] - paragraph [0056] * * Manufacturing example 8 *; paragraph [0088] - paragraph [0102]; examples; tables 1,2 ----- | 1-15 | |

The present search report has been drawn up for all claims

1

| Place of search | Date of completion of the search | Examiner |
|---|---|---|
| Munich | 4 August 2022 | Lindner, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 22 15 7830

This annex lists the patent family members relating to the patent documents cited in the above-mentioned European search report. The members are as contained in the European Patent Office EDP file on The European Patent Office is in no way liable for these particulars which are merely given for the purpose of information.

04-08-2022

| Patent document cited in search report | Publication date | Patent family member(s) | Publication date |
|---|---|---|---|
| US 5760337 A | 02-06-1998 | AU 716191 B2 | 24-02-2000 |
| | | BR 9713713 A | 08-02-2000 |
| | | CA 2275366 A1 | 25-06-1998 |
| | | CN 1240465 A | 05-01-2000 |
| | | DE 69716637 T2 | 13-03-2003 |
| | | EP 0944671 A1 | 29-09-1999 |
| | | HU 0000811 A2 | 28-07-2000 |
| | | ID 21657 A | 08-07-1999 |
| | | JP 2001506805 A | 22-05-2001 |
| | | KR 20000069484 A | 25-11-2000 |
| | | MY 118367 A | 30-10-2004 |
| | | TW 513479 B | 11-12-2002 |
| | | US 5760337 A | 02-06-1998 |
| | | WO 9827160 A1 | 25-06-1998 |
| | | ZA 9711196 B | 23-06-1998 |
| US 2003116272 A1 | 26-06-2003 | NONE | |
| US 2019322785 A1 | 24-10-2019 | US 2019322785 A1 | 24-10-2019 |
| | | US 2019345270 A1 | 14-11-2019 |
| | | WO 2018129020 A1 | 12-07-2018 |
| | | WO 2018129023 A1 | 12-07-2018 |
| US 6281314 B1 | 28-08-2001 | CN 1245181 A | 23-02-2000 |
| | | JP 2000119335 A | 25-04-2000 |
| | | KR 20000011442 A | 25-02-2000 |
| | | MY 133093 A | 31-10-2007 |
| | | SG 82007 A1 | 24-07-2001 |
| | | TW 585875 B | 01-05-2004 |
| | | US 6281314 B1 | 28-08-2001 |
| CN 104745133 A | 01-07-2015 | NONE | |
| JP 2006335861 A | 14-12-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 20192135

### Non-patent literature cited in the description


- **SANUSI et al.** *Applied Clay Science,* 2020, vol. 185, 105408
- **ARADHANA et al.** *International Journal of Adhesion and Adhesives,* 2020, vol. 99, 102596
- **ETIKA et al.** *Carbon,* 2009, vol. 47, 3128-3136
- **FLANDIN et al.** *Polymer,* 2001, vol. 42, 827-838